# FASCICULE DE BREVET EUROPEEN

(11) **EP 4 281 329 B1**
(45) Date de publication et mention de la délivrance du brevet: **19.11.2025**
(21) Numéro de dépôt: 21830463.2
(22) Date de dépôt: 30.11.2021
(51) Int. Cl.: B60R 16/02, H01M 50/20, B62J 43/00

(54) **DISPOSITIF DE MAINTIEN D'AU MOINS UN FAISCEAU ÉLECTRIQUE À PROXIMITÉ D'UN BAC DE BATTERIE**
VORRICHTUNG ZUM HALTEN WENIGSTENS EINES KABELBAUMES NAHE EINER BATTERIEFACH
DEVICE FOR HOLDING AT LEAST ONE WIRING HARNESS CLOSE TO A BATTERY TRAY

(30) Priorité: 25.01.2021 FR 2100667
(43) Date de publication de la demande: 29.11.2023
(73) Titulaire: Stellantis Auto SAS, 78300 Poissy (FR)
(72) Inventeur: RAHOUTI, Fatima Zahra, Casablanca, 20520 (MA); GOUJ, Saad, Casablanca, 20520 (MA); KHOUKHI, Amal, Casablanca, 20520 (MA)
(74) Mandataire: PSIP
(86) Numéro de dépôt international: PCT/FR2021/052138
(87) Numéro de publication internationale: WO 2022/157431

(56) Documents cités:
- EP-A1- 2 468 617
- EP-A1- 2 980 883
- DE-A1- 102019 203 782
- US-A1- 2018 105 209

## Description

La présente invention porte sur un dispositif de maintien d'au moins un faisceau électrique à proximité d'un bac de batterie.

L'invention trouve une application particulièrement avantageuse, mais non exclusive, avec les véhicules automobiles de type hybride utilisant une source d'énergie thermique et une source d'énergie électrique pour assurer sa traction.

US 2015/105209 divulgue un ensemble pour un véhicule automobile comportant un bac de batterie, un support de calculateur, et un faisceau électrique. Ledit ensemble comporte un tunnel de guidage à l'intérieur duquel est disposé le faisceau électrique, ledit tunnel de guidage étant délimité d'une part par une portion du support de calculateur et d'autre part par une portion du bac de batterie.

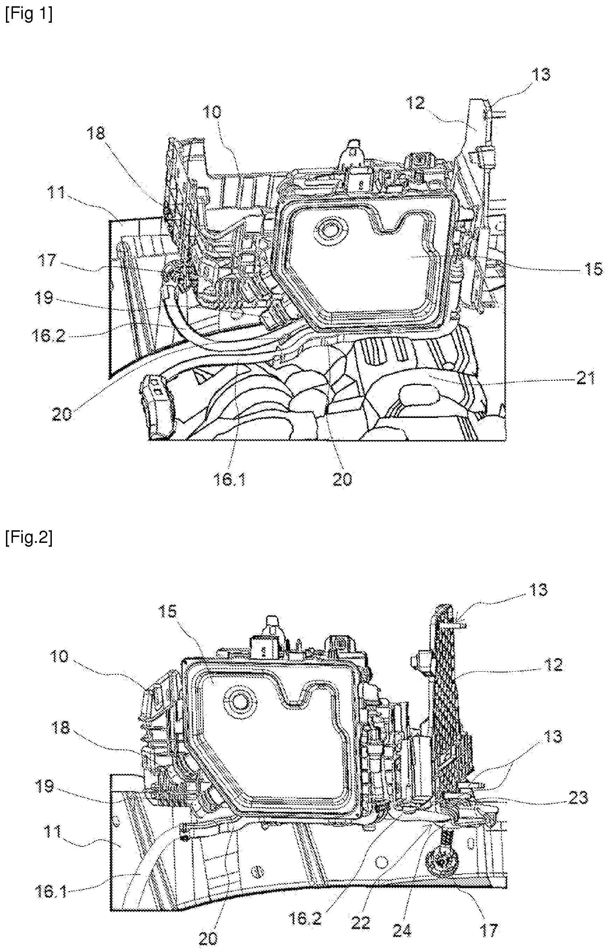

La figure 1 montre un bac de batterie 10, notamment un bac pour une batterie au plomb ayant typiquement une tension de fonctionnement de 12 Volts. Ce bac de batterie 10 est destiné à être monté sur une cale de moteur thermique (non visible) positionnée sur un brancard 11 longitudinal du véhicule. Ce bac de batterie 10 comporte un fond et des parois latérales définissant un espace à l'intérieur duquel est disposé au moins un élément de puissance apte à générer du courant par réaction chimique.

Un support 12 de calculateur, notamment un support de calculateur moteur, est monté sur le bac de batterie 10. A cet effet, le support 12 est fixé sur le bac de batterie 10 au moyen d'organes de fixation de type vis ou rivets. Le support 12 présente la forme d'une plaque de forme globalement rectangulaire. Le support 12 est muni d'interfaces de fixation 13 constituées par exemple par des trous dans lesquels sont insérés des organes de fixation, tels que des vis, destinés à venir coopérer avec un boîtier du calculateur (non représenté).

Un convertisseur continu/continu 15 est monté sur le bac de batterie 10. Le convertisseur continu/continu 15 pourra être fixé sur une paroi latérale du bac de batterie 10 via un dispositif d'encliquetage et/ou des organes de fixation, tels que des vis ou des rivets. Le convertisseur continu/continu 15 permet d'interconnecter un réseau électrique haute tension ayant typiquement une tension de fonctionnement de 48 Volts avec un réseau électrique basse tension ayant typiquement une tension de fonctionnement de 12 Volts.

Le réseau électrique haute tension comporte une batterie de puissance par exemple de type lithium-ion (ou Li-lon), nickel-hydrure métallique (ou Ni-Mh), ou nickel-cadmium (Ni-Cd) reliée électriquement à un ou plusieurs moteurs électriques de traction.

Le réseau électrique basse tension comporte la batterie associée au bac 10 ainsi que des consommateurs électriques du véhicule automobile, tel qu'un système d'éclairage, des actionneurs de vitres ou de sièges, le calculateur moteur, voire même un démarreur dans le cas d'un véhicule hybride comportant un moteur thermique.

Un faisceau électrique 16.1 comporte une première extrémité reliée électriquement à une borne du convertisseur continu/continu 15 et une deuxième extrémité reliée électriquement au réseau électrique haute tension. Le réseau électrique haute tension pourra par exemple être disposé à l'arrière du véhicule dans le cas où le ou les moteurs électriques sont accouplés avec le train de roues arrières.

Un faisceau électrique 16.2 comporte une première extrémité reliée électriquement à une borne négative du convertisseur continu/continu 15 et une deuxième extrémité reliée électriquement à un terminal de connexion 17 disposé sur le brancard 11 pour former la masse du véhicule automobile.

Afin d'assurer son refroidissement, le convertisseur continu/continu 15 pourra comporter une entrée 18 et une sortie 19 d'un circuit de refroidissement interne, notamment un circuit de refroidissement à base d'eau.

En l'occurrence, les deux faisceaux électriques 16.1, 16.2 sont maintenus et guidés par des goulottes 20 disposées sous le convertisseur continu/continu 15. Suivant certaines configurations de véhicule automobile, il n'y a toutefois pas assez d'espace pour le passage des faisceaux 16.1, 16.2 et des goulottes 20 en raison de la proximité de ces éléments avec la zone de débattements de la boîte de vitesses référencée 21.

L'invention vise à remédier efficacement à cet inconvénient en proposant un ensemble pour un véhicule automobile comportant:
- un bac de batterie,
- un support de calculateur, notamment un support de calculateur moteur, monté sur le bac de batterie, et
- au moins un faisceau électrique,
- ledit ensemble comportant un tunnel de guidage à l'intérieur duquel est disposé le faisceau électrique, ledit tunnel de guidage étant délimité d'une part par une portion du support de calculateur et d'autre part par une portion du bac de batterie, un dispositif d'encliquetage étant situé dans un prolongement de la portion du support de calculateur et de la portion du bac de batterie délimitant le tunnel de guidage.

L'invention permet ainsi, grâce à la présence du tunnel du guidage, de déporter le faisceau électrique dans une zone où la boîte de vitesses n'est pas susceptible d'interférer avec ledit faisceau électrique lors de ses débattements. L'invention permet en outre de faire l'économie d'une goulotte de guidage du faisceau électrique, ce qui réduit le prix de revient de l'ensemble. L'invention permet également de réduire le nombre d'opérations de montage.

Selon une réalisation de l'invention, ledit ensemble comporte en outre un convertisseur continu/continu monté sur le bac de batterie.

Selon une réalisation de l'invention, le faisceau électrique comporte une première extrémité reliée électriquement au convertisseur continu/continu et une deuxième extrémité reliée à un terminal de connexion disposé sur un brancard du véhicule automobile.

Selon une réalisation de l'invention, le terminal de connexion est positionné du côté d'une paroi du bac de batterie portant le support de calculateur.

Selon l'invention, le dispositif d'encliquetage comporte un plot issu de l'un des éléments parmi le support de calculateur et le bac de batterie destiné à coopérer avec un logement ménagé dans l'autre des éléments parmi le support de calculateur et le bac de batterie.

Selon une réalisation de l'invention, ledit ensemble comporte en outre une goulotte de guidage à l'intérieur de laquelle est inséré un deuxième faisceau électrique.

Selon une réalisation de l'invention, la goulotte de guidage est disposée sous le convertisseur continu/continu.

L'invention a également pour objet un véhicule automobile comportant un ensemble tel que précédemment défini.

L'invention sera mieux comprise à la lecture de la description qui suit et à l'examen des figures qui l'accompagnent. Ces figures ne sont données qu'à titre illustratif mais nullement limitatif de l'invention.
[Fig. 1] La figure 1, déjà décrite, est une vue en perspective illustrant un guidage de faisceaux électriques au moyen de goulottes de guidage disposées sous un convertisseur continu/continu;
[Fig. 2] La figure 2 montre un convertisseur continu/continu comportant un faisceau électrique disposé à l'intérieur d'un tunnel de guidage selon l'invention délimité par une portion d'un support de calculateur et une portion d'un bac de batterie;
[Fig. 3] La figure 3 est une vue en perspective détaillée du tunnel de guidage du faisceau électrique de la figure 2;
[Fig. 4] La figure 4 est une vue de dos du support de calculateur comportant une portion à une de ses extrémités délimitant le tunnel de guidage du faisceau électrique.

Les éléments identiques, similaires, ou analogues conservent les mêmes références d'une figure à l'autre.

Les figures 2, 3, et 4 montrent un bac de batterie 10, notamment un bac d'une batterie au plomb ayant typiquement une tension de fonctionnement de 12 Volts. Ce bac de batterie 10 est destiné à être monté sur une cale de moteur thermique (non visible) positionnée sur un brancard 11 longitudinal du véhicule. Ce bac de batterie 10 comporte un fond et des parois latérales définissant un espace à l'intérieur duquel est disposé au moins un élément de puissance apte à générer du courant par réaction chimique.

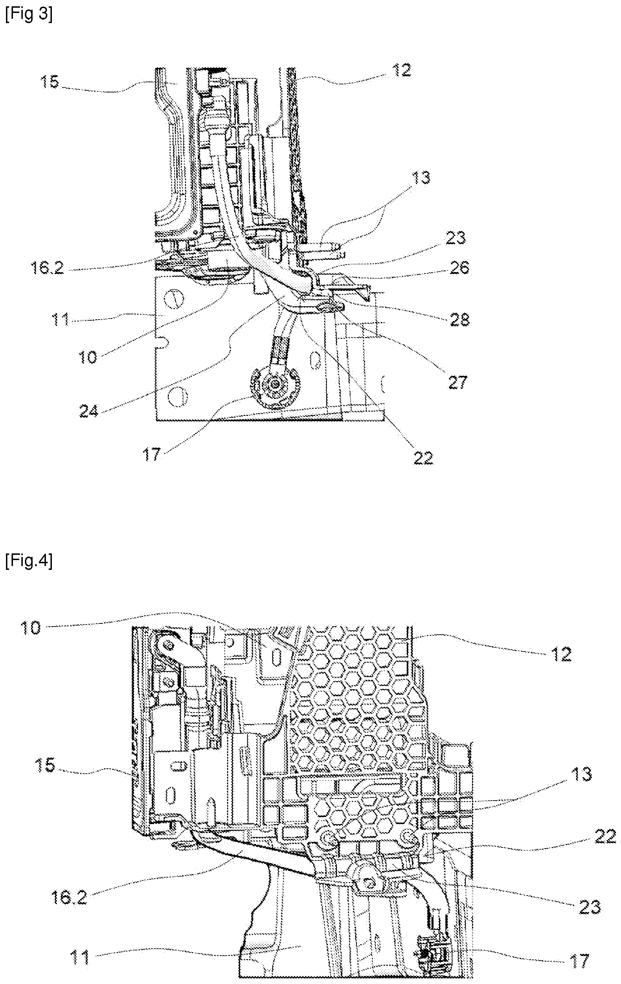

Un support 12 de calculateur, notamment un support 12 de calculateur moteur, est monté sur le bac de batterie 10. A cet effet, le support 12 est fixé sur une paroi latérale du bac de batterie 10 au moyen d'organes de fixation de type vis ou rivets. Le support 12 présente la forme d'une plaque de forme globalement rectangulaire, tel que montré sur les figures 2 et 4. Le support 12 est muni d'interfaces de fixation 13 constituées par exemple par des trous dans lesquels sont insérés des organes de fixation, tels que des vis, destinés à venir coopérer avec un boîtier du calculateur (non représenté).

Un convertisseur continu/continu 15 est monté sur le bac de batterie 10. Le convertisseur continu/continu 15 pourra être fixé sur une paroi latérale du bac de batterie 10 via un dispositif d'encliquetage et/ou des organes de fixation, tels que des vis ou des rivets. Le convertisseur continu/continu 15 permet d'interconnecter un réseau électrique haute tension ayant typiquement une tension de fonctionnement de 48 Volts avec un réseau électrique basse tension ayant typiquement une tension de fonctionnement de 12 Volts.

Le réseau électrique haute tension comporte une batterie de puissance par exemple de type lithium-ion (ou Li-lon), nickel-hydrure métallique (ou Ni-Mh), ou nickel-cadmium (Ni-Cd) reliée électriquement à un ou plusieurs moteurs électriques de traction.

Le réseau électrique basse tension comporte la batterie associée au bac 10 ainsi que des consommateurs électriques du véhicule automobile, tel qu'un système d'éclairage, des actionneurs de vitres ou de sièges, le calculateur moteur, voire même un démarreur dans le cas d'un véhicule comportant un moteur thermique.

Un faisceau électrique 16.1 comporte une première extrémité reliée électriquement à une borne du convertisseur continu/continu 15 et une deuxième extrémité reliée électriquement au réseau électrique haute tension. Le réseau électrique haute tension pourra par exemple être disposé à l'arrière du véhicule dans le cas où le ou les moteurs électriques sont accouplés avec le train de roues arrières.

Un faisceau électrique 16.2 comporte une première extrémité reliée électriquement à une borne négative du convertisseur continu/continu 15 et une deuxième extrémité reliée électriquement à un terminal de connexion 17 disposé sur le brancard 11 pour former la masse du véhicule automobile. Avantageusement, le terminal de connexion 17 est positionné du côté d'une paroi du bac de batterie 10 portant le support 12 de calculateur, tel que cela est bien visible sur les figures 2 et 3.

Afin d'assurer son refroidissement, le convertisseur continu/continu 15 pourra comporter une entrée 18 et une sortie 19 d'un circuit de refroidissement interne, notamment un circuit de refroidissement à base d'eau.

Le faisceau électrique 16.2 est disposé à l'intérieur d'un tunnel de guidage 22. Le tunnel de guidage 22 est délimité d'une part par une portion 23 du support 12 de calculateur et d'autre part par une portion 24 du bac de batterie 10.

La portion 23 du support 12 est située à une extrémité du support, en l'occurrence l'extrémité inférieure. La portion 23 du support 12 pourra comporter une paroi présentant une forme incurvée, notamment une forme en arc de cercle ou une forme en L notamment à coin arrondi.

La portion 24 du bac de batterie 10 pourra comporter une paroi présentant une forme incurvée, notamment une forme en arc de cercle ou une forme en L à coin arrondi. Les portions 23, 24 du support 12 de calculateur et du bac de batterie 10 présentent des formes complémentaires de façon à délimiter les faces internes du tunnel de guidage 22.

Le tunnel de guidage 22 pourra présenter une section transversale ayant une forme rectangulaire, carrée, le cas échéant avec des coins arrondis, une forme ronde, ovale, ou toute autre forme adaptée à l'application.

Comme on peut le voir sur la figure 3, afin d'assurer la tenue mécanique du tunnel de guidage 22, un dispositif d'encliquetage 26 est situé dans un prolongement de la portion 23 du support 12 de calculateur et de la portion 24 du bac de batterie 10 délimitant le tunnel de guidage 22.

Le dispositif d'encliquetage 26 comporte un plot 27 issu du bac de batterie 10 destiné à coopérer avec un logement 28 ménagé dans le support 12. Bien entendu, la structure pourra être inversée, c'est-à-dire que le plot 27 pourra être issu du support 12 tandis que le logement 28 pourra être ménagé dans le bac de batterie 10.

Comme cela est visible sur la figure 2, on pourra également prévoir une goulotte de guidage 20 à l'intérieur de laquelle est inséré le faisceau électrique 16.1. La goulotte de guidage 20 de forme allongée pourra comporter une section transversale en forme de U. La goulotte de guidage 20 est disposée sous le convertisseur continu/continu 15.

Lors du montage de l'ensemble, le bac de batterie 10 est d'abord monté sur la cale du moteur thermique. Le convertisseur continu/continu 15 est ensuite encliqueté sur une paroi latérale du bac de batterie 10. Puis, le support 12 du calculateur moteur est fixé sur une paroi latérale du bac de batterie 10 adjacente à celle sur laquelle est monté le convertisseur 15. Lors de la mise en place du support 21, le faisceau électrique 16.2 est disposé à l'intérieur du tunnel de guidage 22 formé par les portions 23 et 24. Le maintien du tunnel de guidage 22 est assuré par encliquetage du support 12 avec le bac de batterie 10 via le dispositif d'encliquetage 26.

L'invention a également pour objet un véhicule automobile comportant un ensemble tel que précédemment décrit.

En variante, le support 12 pourra supporter un calculateur du véhicule autre que le calculateur moteur.

En variante, le bac de batterie 10 pourra contenir des éléments de puissance de type lithium-ion (ou Li-lon), de type nickel-hydrure métallique (ou Ni-Mh), de type nickel-cadmium (Ni-Cd), ou encore au plomb.

## Revendications

1. Ensemble pour un véhicule automobile comportant:
- un bac de batterie (10),
- un support (12) de calculateur, notamment un support de calculateur moteur, monté sur le bac de batterie (10), et
- au moins un faisceau électrique (16.1, 16.2),
**caractérisé en ce que** ledit ensemble comporte un tunnel de guidage (22) à l'intérieur duquel est disposé le faisceau électrique (16.2), ledit tunnel de guidage (22) étant délimité d'une part par une portion (23) du support (12) de calculateur et d'autre part par une portion (24) du bac de batterie (10), un dispositif d'encliquetage (26) étant situé dans un prolongement de la portion (23) du support (12) de calculateur et de la portion (24) du bac de batterie (10) délimitant le tunnel de guidage (22).

2. Ensemble selon la revendication 1, **caractérisé en ce qu'**il comporte en outre un convertisseur continu/continu (15) monté sur le bac de batterie (10).

3. Ensemble selon la revendication 2, **caractérisé en ce que** le faisceau électrique (16.2) comporte une première extrémité reliée électriquement au convertisseur continu/continu (15) et une deuxième extrémité reliée à un terminal de connexion (17) disposé sur un brancard (11) du véhicule automobile.

4. Ensemble selon la revendication 3, **caractérisé en ce que** le terminal de connexion (17) est positionné du côté d'une paroi du bac de batterie (10) portant le support (12) de calculateur.

5. Ensemble selon l'une des revendications 1 à 4, **caractérisé en ce que** le dispositif d'encliquetage (26) comporte un plot (27) issu de l'un des éléments parmi le support (12) de calculateur et le bac de batterie (10) destiné à coopérer avec un logement (28) ménagé dans l'autre des éléments parmi le support (12) de calculateur et le bac de batterie (10).

6. Ensemble selon l'une quelconque des revendications 1 à 5, **caractérisé en ce qu'**il comporte en outre une goulotte de guidage (20) à l'intérieur de laquelle est inséré un deuxième faisceau électrique (16.1).

7. Ensemble selon les revendications 2 et 6, **caractérisé en ce que** la goulotte de guidage (20) est disposée sous le convertisseur continu/continu (15).

8. Véhicule automobile comportant un ensemble tel que défini selon l'une quelconque des revendications précédentes.

## Patentansprüche

1. Baugruppe für ein Kraftfahrzeug, umfassend:
- einem Batterieträger (10),
- einen Rechnerträger (12), insbesondere einen Motorrechnerträger,
auf dem Batterieträger (10) montiert und
- mindestens einen elektrischen Kabelbaum (16.1, 16.2),
gekennzeichnet , dass die Baugruppe einen Führungstunnel (22) umfasst, in dem der elektrische Kabelbaum (16.2) angeordnet ist, wobei der Führungstunnel (22) einerseits durch einen Abschnitt (23) des Computerträgers (12) begrenzt ist und
andererseits durch einen Abschnitt (24) des Batteriefachs (10), wobei sich in Verlängerung des den Führungstunnel (22) begrenzenden Abschnitts (23) des Rechnerträgers (12) und des Abschnitts (24) des Batteriefachs (10) eine Rastvorrichtung (26) befindet.

2. Baugruppe nach Anspruch 1, **dadurch gekennzeichnet, dass** sie weiterhin umfasst
einen DC/DC-Wandler (15), der auf dem Batterieträger (10) montiert ist.

3. Baugruppe nach Anspruch 2, **dadurch gekennzeichnet, dass** der elektrische Kabelbaum (16.2) ein erstes Ende aufweist, das elektrisch mit dem DC/DC-Wandler (15) verbunden ist, und ein zweites Ende, das mit einer Anschlussklemme (17) verbunden ist, die auf einer Trage (11) des Kraftfahrzeugs angeordnet ist.

4. Baugruppe nach Anspruch 3, **dadurch gekennzeichnet, dass** der Anschluss von
Der Anschluss (17) ist seitlich an einer Wand des Batterieträgers (10) angeordnet, die den Rechnerträger (12) trägt.

5. Anordnung nach einem der Ansprüche 1 bis 4, **dadurch gekennzeichnet, dass** die Schnappbefestigungsvorrichtung (26) einen Bolzen (27) umfasst, der von einem der Elemente ausgeht,
der Computerträger (12) und das Batteriefach (10) dazu bestimmt sind, mit einem Gehäuse (28) zusammenzuwirken, das in dem anderen der Elemente, dem Computerträger (12) und dem Batteriefach (10), vorgesehen ist.

6. Anordnung nach einem der Ansprüche 1 bis 5, **dadurch gekennzeichnet, dass** sie außerdem eine Führungsrinne (20) umfasst, in die ein zweiter elektrischer Kabelbaum (16.1) eingeführt wird.

7. Anordnung nach den Ansprüchen 2 und 6, **dadurch gekennzeichnet, dass** die Rutsche
Die Führung (20) ist unter dem DC/DC-Wandler (15) angeordnet.

8. Kraftfahrzeug, das eine Baugruppe gemäß einem der vorhergehenden Ansprüche umfasst.

## Claims

1. Assembly for a motor vehicle comprising:
- a battery tray (10),
- a computer support (12), in particular an engine computer support,
mounted on the battery tray (10), and
- at least one electrical harness (16.1, 16.2),
**characterized in that** said assembly comprises a guide tunnel (22) inside which the electrical harness (16.2) is arranged, said guide tunnel (22) being delimited on the one hand by a portion (23) of the computer support (12) and
on the other hand by a portion (24) of the battery tray (10), a snap-in device (26) being located in an extension of the portion (23) of the computer support (12) and of the portion (24) of the battery tray (10) delimiting the guide tunnel (22).

2. Assembly according to claim 1, **characterized in that** it further comprises a DC/DC converter (15) mounted on the battery tray (10).

3. Assembly according to claim 2, **characterized in that** the electrical harness (16.2) comprises a first end electrically connected to the DC/DC converter (15) and a second end connected to a connection terminal (17) arranged on a stretcher (11) of the motor vehicle.

4. Assembly according to claim 3, **characterized in that** the terminal of connection (17) is positioned on the side of a wall of the battery tray (10) carrying the computer support (12).

5. Assembly according to one of claims 1 to 4, **characterized in that** the snap-fastening device (26) comprises a stud (27) originating from one of the elements among the computer support (12) and the battery tray (10) intended to cooperate with a housing (28) provided in the other of the elements among the computer support (12) and the battery tray (10).

6. Assembly according to any one of claims 1 to 5, **characterized in that** it further comprises a guide chute (20) inside which a second electrical harness (16.1) is inserted.

7. Assembly according to claims 2 and 6, **characterized in that** the chute guide (20) is arranged under the DC/DC converter (15).

8. Motor vehicle comprising an assembly as defined according to any one of the preceding claims.
